# EUROPÄISCHE PATENTSCHRIFT

(11) **EP 0 496 047 B1**
(45) Veröffentlichungstag und Bekanntmachung des Hinweises auf die Patenterteilung: **07.02.1996**
(21) Anmeldenummer: 91119306.8
(22) Anmeldetag: 13.11.1991
(51) Int. Cl.: B23Q 9/00

(54) **Handkreissäge**
Circular hand saw
Scie circulaire à main

(30) Priorität: 22.12.1990 DE 4041657
(43) Veröffentlichungstag der Anmeldung: 29.07.1992
(73) Patentinhaber: ROBERT BOSCH GMBH, D-70442 Stuttgart (DE)
(72) Erfinder: Reich, Doris, W-7000 Stuttgart 80 (DE); Schilling, Rainer, Dipl.-Ing., W-7000 Stuttgart 80 (DE); Ferenczffy, Ladislaus, W-7022 Leinfelden-Echterdingen 1 (DE); Wuensch, Steffen, Dipl.-Ing., W-7031 Holzgerlingen (DE); Kraenzler, Ernst, W-7022 Leinfelden-Echterdingen 3 (DE); Fuchs, Wolfgang, W-7024 Filderstadt 1 (DE); Kemmer, Claus, Dipl.-Ing., W-7447 Aichtal-Neuenhaus (DE); Zaiser, Adolf Ing., W-7316 Koengen (DE); Braunbach, Karl-Heinz, Dipl.-Ing., W-7022 Leinfelden-Echterdingen (DE); Schramm, Heribert, Dipl.-Ing. (FH), W-7000 Stuttgart 70 (DE); Matzo, David, Dipl.-Ing., W-7022 Leinfelden-Echterdingen (DE); Haerle, Vinzenz, Dipl.-Ing. (FH), W-7449 Neckartenzlingen (DE); Hoelderlin, Andreas, Dr.-Ing., W-7122 Besigheim (DE)

(56) Entgegenhaltungen:
- DE-A- 3 606 525
- US-A- 3 586 077
- EUROPEAN PLASTICS NEWS. Bd. 9, Nr. 10, Oktober 1982, LONDON GB Seiten 20 - 26; 'ANGLES ON INJECTION, OUTSERT MOULDING'

## Beschreibung

### Stand der Technik

Die Erfindung geht aus von einer Handkreissäge nach der Gattung des Anspruchs 1.

Eine gattungsgemäße Handkreissäge ist aus der US-PS 3.298.407 bekannt. Diese besitzt eine Grundplatte, die eine im Profil u-förmige, tunnelartige Ausnehmung auf ihrer Unterseite hat, in der die Führungsrippe einer Führungsschiene verschiebbar ist. Die Grundplatte besteht aus dickwandigem, hohen Herstellungsaufwand erforderndem Material. Auch für den Anbau zusätzlicher Teile, wie z.B. Scharniere, Klemmvorrichtungen ist ein erheblicher Montageaufwand notwendig.

Aus der DE-PS 30 07 310 ist eine weitere, gattungsgemäße Handkreissäge bekannt. Deren Grundplatte besteht aus Blech mit einer schlitzartigen Ausnehmung mit über annähernd die gesamte Plattenlänge führenden, hochgebogenen Rändern. Die Ränder bilden Führungsflächen, die an der Führungsrippe einer Führungsschiene verschiebbar sind. Die Grundplatte hat ein geringes Gewicht und ist durch Prägen und Stanzen in nur einem Arbeitsgang günstig herstellbar. Nachteilig ist der hohe Verschleiß des teuren Präge- und Stanzwerkzeugs. Außerdem ist die bekannte Grundplatte scharfkantig und hat harte Gleitflächen, die zwar verschleißfest sind, jedoch beim Vorschub Verschleiß an Werkstückflächen verursachen können. Dies ist insbesondere bei polierten, feinbearbeiteten Flächen unerwünscht. Daher wird in derartigen Fällen an der Grundplatte nachträglich eine gesonderte die Werkstückflächen schonende Gleitplatte aus Kunststoff montiert, die teuer ist, den Gewichtsvorteil der an sich leichten Blechgrundplatte zunichte macht und außerdem die mögliche Schnittiefe bei Arbeiten mit der Handkreissäge um die Höhe der Gleitplatte verringert.

### Vorteile der Erfindung

Die erfindungsgemäße Handkreissäge mit den Merkmalen des Anspruchs 1 hat den Vorteil, daß sie besonders einfach und kostengünstig herstellbar ist wobei viele Zusatzteile in einem einzigen Arbeitsgang ohne nachträgliche Montage maßgenau an der Handkreissäge befestigbar sind. Auf diese Weise gehören komfortverbessernde Zusatzteile ohne Kostensteigerung zur Grundausstattung der erfindungsgemäßen Handkreissäge. Wegen zu hoher Kosten mußte auf diese Teile und damit auf einen deutlich erhöhten Gebrauchswert der Handkreissäge bisher verzichtet werden.

An den herstellungsbedingt gerundeten Übergängen an Kanten und Kehlen der Grundplatte und den Zusatzteilen kann sich nur wenig Staub und Schmutz festsetzen, diese können leicht gereinigt werden.

Die Merkmale der Unteransprüche kennzeichnen vorteilhafte Ausgestaltungen der im Anspruch 1 beanspruchten Spannvorrichtung, wie z.B. die Justierbarkeit der Führungskulissen durch Eigenelastizität.

### Zeichnung

Die Erfindung ist nachfolgend anhand eines Ausführungsbeispieles mit zugehöriger Zeichnung erläutert. In der Zeichnung zeigt die Fig. 1 eine perspektivische Darstellung einer Handkreissäge mit Parallelanschlag und Führungsschiene, Fig. 2 eine Draufsicht auf die Grundplatte als montagebereites Einzelteil, Fig. 3 eine Seitenansicht der Grundplatte.

### Beschreibung des Ausführungsbeispiels

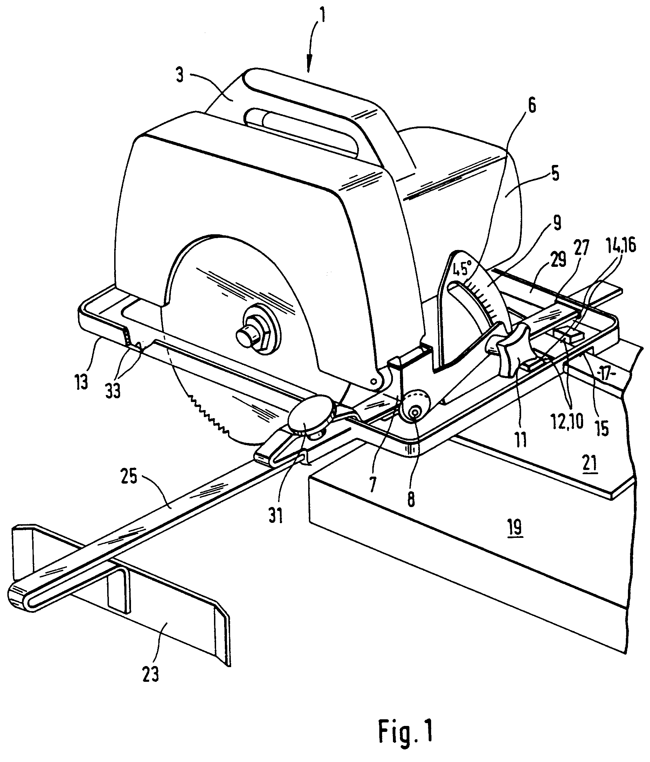

Das Ausführungsbeispiel in Figur 1 zeigt eine Handkreissäge 1 mit einem Handgriff 3 an einem Maschinengehäuse 5. Die Handkreissäge 1 sitzt auf einem Träger 7, der schwenkbar um ein Widerlager 8 und eine Führungskulisse 9 mit Skala 6 gelagert und an dieser über eine Stellschraube 11 in gewählten Schwenkwinkelpositionen festklemmbar ist. Das Widerlager 8 und die Führungskulisse 9 sind fest auf einer Grundplatte 13 angeordnet. Diese trägt auf ihrer Unterseite einen in Vorschubrichtung durchgehenden Schlitz 15.

Zusätzlich zu einem ersten, auf der Grundplatte 13 sitzenden Paar Führungsklötze 14, 16 aus Kunststoff mit Führungsflächen 10, 12 ist, nicht dargestellt, im Schlitzverlauf beabstandet, ein zweites Paar Führungsklötze angeordnet. Die Führungsflächen 10, 12 überragen die Ränder des Schlitzes 15, der mit erheblichem Spiel über eine Führungsrippe 17 einer auf einem Werkstück 19 aufliegenden Führungsschiene 21 greift. Die Führungsflächen 10, 12 stützen sich an den Seiten der Führungsrippe 17 ab, so daß die Grundplatte 13 an der Führungsschiene 21 geführt verschiebbar ist.

Ein Parallelanschlag 23 mit einem schienenartigen Anschlagträger 25 ist durch Schlitze 27 in den Seitenwänden 29 der Grundplatte 13 über Klemmittel 31 klemm- und verschiebbar gehalten.

Die Grundplatte 13 trägt einen angespritzten Kunststoffüberzug 33. Ebenso sind die Führungsklötze 14, 16 und die Klemmittel 31 an die Grundplatte 13 angespritzt bzw. angegossen.

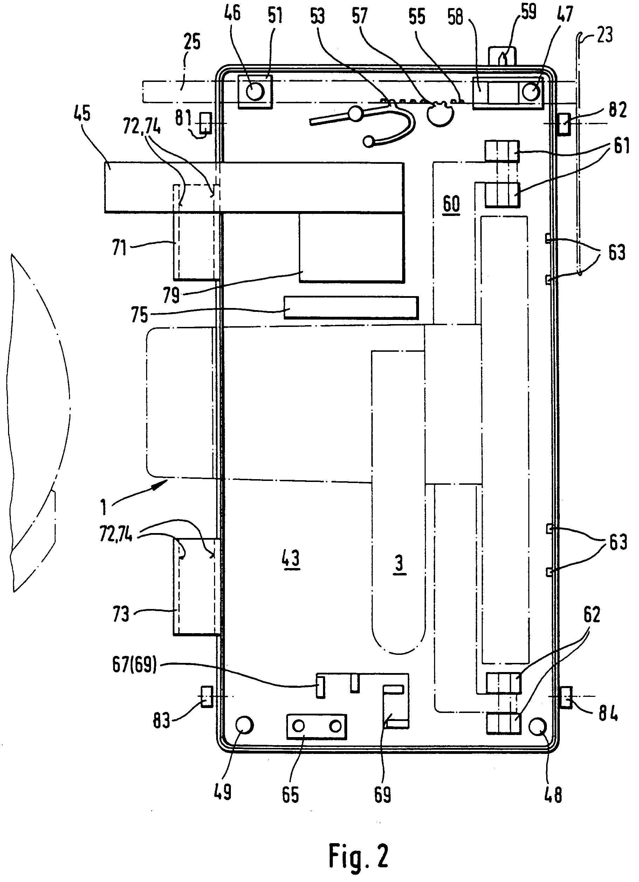

In Figur 2 ist die Draufsicht eines Ausführungsbeispiels einer Grundplatte 43 einer nicht im einzelnen dargestellten Handkreissäge mit einer Vielzahl angespritzter bzw. angegossener Teile gezeigt. Die Grundplatte 43 trägt - in Vorschubrichtung betrachtet - am vorderen Rand einen Zusatzhandgriff 45, Aufwickeldorne 46, 47, für ein nicht dargestelltes Netzkabel mit Netzstecker, Klemm- und Führungslappen 51, 58 zum Halten des Anschlagträgers 25, einen Arretierhebel 53 zum Einrasten in entsprechende, verzahnte Gegenflächen 55 des Anschlagträgers 25, ein in die Gegenflächen 55 greifendes Stellrad 57 zum Feinverstellen des Parallelanschlags 23 und - in Verlängerung der Sägeblattspur - ein Schnittvisier 59.

An seinem - in Vorschubrichtung betrachtet - rechten Rand trägt die Grundplatte 43 scharnierartige, die Schwenkachse bestimmende Widerlager 61, 62, in denen ein schwenkbarer, eingegossener Träger 60 sitzt, auf dem die Handkreissäge 1 - mit diesem für Gehrungsschnitte gemeinsam schwenkbar - festgehalten ist. Am rechten Rand der Grundplatte 43 sind außerdem - zum Tauchsägen - Markierungen 63 eingeprägt, die tabellenartig ein Zuordnen der Lage der Schnittkanal-Enden zur jeweils gewählten Tauchtiefe ermöglichen. Damit sind die Schnittkanallängen für alle möglichen Tiefen-Positionen im Voraus bestimmbar.

Die Grundplatte 43 trägt am - in Vorschubrichtung betrachtet - hinteren Rand weitere Aufwickeldorne 48, 49 zum Halten des nicht dargestellten Netzkabels, eine steckdosenartige Netzsteckeraufnahme 65 und Netzkabelführungen 67, 69 zum Festhalten des Netzkabels je nach Arbeitsposition. Die Netzsteckeraufnahme 65 ist elektrisch mit dem Netzanschluß des Elektromotors verbunden und erlaubt ein Anschließen anderer Elektrogeräte oder ein Betreiben der Handkreissäge mit einem separaten, von der Handkreissäge lösbaren Netzkabel.

Die Grundplatte 43 trägt am - in Vorschubrichtung betrachtet - linken Rand zwei in Längsrichtung voneinander beabstandete Führungsklötze 71, 73 aus Kunststoff, von denen jeder mit einer U-förmigen Nut versehen ist, deren Seiten Paare von Führungsflächen 72, 74 bilden, mit denen die Führungsklötze 71, 73 eine nichtdargestellte Führungsrippe einer Führungsschiene umgreifen und sich daran leitbar abstützen können.

Außerdem ist eine Führungskulisse 75 an der Grundplatte 43 befestigt, in der die Handkreissäge 1 hin- und herschiebbar - nichtdargestellt - geführt ist. Die Führungskulisse 75 trägt eine nichtdargestellte Skala, so daß der Schwenkwinkel der Handkreissäge 1 zur Grundplatte 43 genau eingestellt werden kann.

Schematisch dargestellt ist ein Behälter 79, der beispielsweise zum Aufbewahren eines Bleistifts, Maßband, Lot u.dgl. geeignet ist.

An den beiden Längsrändern der Grundplatte 43 sind im wesentlichen paarweise einander gegenüberliegende Führungsrollen 81, 82, 83, 84 gelagert, die zur Verminderung der Reibung ein Rollen der Handkreissäge auf Werkstücken oder Führungsschienen ermöglichen.

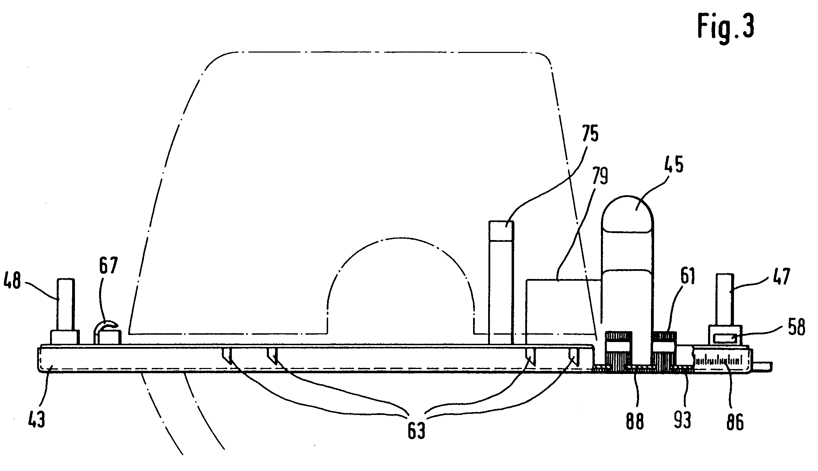

In Figur 3 ist die Grundplatte 43 gemäß Figur 2 in der Seitenansicht gezeigt, wobei besonders die Form und die Anordnung der Sägeblattbegrenzungsmarkierungen 63, der Netzkabel-Aufwickel-Dorne 47, 48, der Netzkabelführungen 67, der Kulisse 75, des Behälters 79, des Zusatzhandgriffs 45, des Widerlagers 61, des Maßstabs 86 und die Kunststoffbeschichtung 93 auf der Kernplatte 88 verdeutlicht wird. In Ergänzung des Maßstabs 86 können Symbole oder Daten zur Betriebsanleitung in die Kunststoffschicht 93 eingeprägt sein.

Die Kunststoffschicht 93 der Grundplatte 13, 43 ist im Outsert-molding-Verfahren angespritzt bzw. angegossen. Sie dient als Korrosionsschutz und als Polster bzw. als Gleit- und Druckfläche, um den Druck möglichst gleichmäßig auf das Werkstück 19 zu verteilen.

Alle an der Grundplatte 13, 43 befestigten Teile bzw. Überzüge können aus dem gleichen Werkstoff in einem einzigen Arbeitsgang hergestellt d.h. angespritzt bzw. angegossen werden. Dazu wird die grob gestanzte, nicht entgratete, gerüstartige Kernplatte 88 in eine Gußform eingelegt. Einströmende Kunststoffschmelze tritt in die den zu gießenden Einzelteilen entsprechenden Hohlräume ein und verbindet sich mit der Kernplatte 88. Die so angeformten Teile haben immer gleiche, genaue Maße und Positionen.

Die Kernplatte 88 kann bei allen weiteren Ausführungsbeispielen aus Metall oder - beim Outsert-molding Verfahren temperaturbeständigem - Kunststoff bestehen.

Bei der vorzugsweise vielfach gelochten Kernplatte 88 besteht der Vorteil einer besonders innigen Verbindung zum Kunststoffüberzug 93 sowie einer deutlichen Gewichtsverminderung gegenüber mit herkömmlicher Verbindungstechnik hergestellten Ausführungsformen der Handkreissäge
Es sind auch Grundplatten herstellbar, deren Teile bzw. Überzüge aus unterschiedlichen Kunststoffen bestehen, die in einem gemeinsamen Arbeitsgang angespritzt werden.

Bei einem nicht dargestellten Ausführungsbeispiel einer erfindungsgemäßen Handkreissäge sind die angespritzten oder angegossenen Führungsklötze auswechselbar. Dies ist besonders vorteilhaft für den Fall, da die Führungsflächen verschlissen sind. Diese Lösung bietet sich besonders vorteilhaft an, wenn die Führungsklötze am Außenrand der Grundplatte angeordnet sind.

Als Lösung für die Ersatz-Verbindungstechnik der auszuwechselnden Führungsklötze kommen Schnapp- oder Schraubverbindungen aber auch Klebeverbindungen infrage, mit denen insbesondere die durch den Gußverbund erzielte hochgenaue Fluchtung der Führungsflächen reproduzierbar wird.

Bei einem weiteren, nicht dargestellten Ausführungsbeispiel der Erfindung sind als Platten ausgestaltete, die Führungsflächen tragende Körper über Schraub- Schnapp- oder Klebeverbindung auswechselbar an den Fübrungsklötzen befestigt. Der Abstand und die Parallelität der Führungsnut zum Sägeblatt ist bei diesem Ausführungsbeispiel durch auswechselbare plattenförmige, Führungsflächen tragende Körper unterschiedlicher Dicke justierbar.

Bei einem anderen, nicht dargestellten Ausführungsbeispiel der Erfindung ist die dem Werkstück zugeordnete Seite der Grundplatte mit Durchbrüchen versehen, denen über mindestens einen Kanal Druck- oder Saugluft zugeführt werden kann, so daß die Grundplatte mittels Unterdruck auf dem Werkstück arretierbar ist bzw. durch Überdruck nach dem Luftkissenprinzip auf einem Werkstück bzw. einer Führungsschiene mit minimaler Reibung verschiebbar ist. Es ist dabei von Vorteil, daß die Durchbrüche und die Kanäle und gegebenenfalls die Kanalanschlüsse an die Grundplatte angespritzt bzw. angegossen sind.

Die genannte, besondere Ausführungsform der Grundplatte mit Öffnungen zur Führung der Handkreissäge über Werkstücke oder Führungsschienen nach dem Luftkissenprinzip ist auch anders ausgestaltet, als vorstehend beschrieben, vorzugsweise mit gesondert montierbaren Einzelteilen, besonders vorteilhaft.

## Patentansprüche

1. Motorgetriebene Handkreissäge 1 mit einer am vorzugsweise einen Elektromotor umgebenden Maschinengehäuse (5), insbesondere schwenkbar, befestigten Grundplatte (13) mit gesonderten, daran befestigten Teilen (9, 14, 16, 27, 45, 59, 61, 63, 71, 73, 75) sowie mit Führungsflächen (10, 12, 72, 74) zum Leiten der Handkreissäge (1) auf einer mit Führungsrippe (17) versehenen Führungsschiene (21) über Werkstücke (19), dadurch gekennzeichnet, daß die Führungsflächen (10, 12, 72, 74) zu gesonderten, an die Grundplatte (13, 43) angespritzten oder angegossenen Führungsklötzen (14, 16, 71, 73) gehören, die die Führungsrippe (17) umgreifen können und sich mit den Führungsflächen (10, 12, 72, 74) an dieser führbar abstützen, wobei die Führungsklötze (14, 16, 71, 73), insbesondere am Außenrand, an der Grundplatte (13, 43) lösbar befestigt sind.

2. Handkreissäge nach Anspruch 1, dadurch gekennzeichnet, daß die Grundplatte (13, 43) ein gerüstartiges Teil, insbesondere eine vielfach gelochte Kern-Platte (88) enthält, das die vorzugsweise aus Kunststoff bestehenden Führungsklötze (14, 16, 71, 73) trägt.

3. Handkreissäge nach Anspruch 2, dadurch gekennzeichnet, daß die Grundplatte (13, 43) einen angespritzten oder angegossenen Kunststoffüberzug (33) trägt.

4. Handkreissäge nach Anspruch 1, dadurch gekennzeichnet, daß die Grundplatte (13, 43) folgende angespritzten oder angegossenen Teile trägt: Einen Zusatzhandgriff (45) und/oder mindestens ein scharnierartiges, die Handkreissäge (1) zum Schwenken aufnehmendes Widerlager (8, 61, 62) und/oder einen die Handkreissäge (1) haltenden, in Widerlagern (8, 61, 62) schwenkbar gehaltenen Träger (7, 60) und/oder mindestens je einem Klemm- und Führungslappen (51, 58) sowie Arretier- und Verstellmittel (53, 57) für einen Parallelanschlag (23) und/oder ein Schnittvisier (59) und/oder mindestens eine Sägeblattbegrenzungsmarkierung (63) und/oder mindestens eine Netzkabelführung (67, 69) und/oder eine Netzstecker-Aufnahme (65) und/oder einen Behälter (79) oder Maßband oder dergl. und/oder mindestens eine Daten- oder Skalenstruktur mit Bedienhinweisen und/oder mindestens eine Führungsrolle (81, 84) zum reibungsarmen Führen der Handkreissäge (1).

5. Handkreissäge nach Anspruch 4, dadurch gekennzeichnet, daß die Netzstecker-Aufnahme (65) elektrisch mit dem Netzanschluß des Elektromotors verbindbar ist.

6. Handkreissäge nach einem der Ansprüche 1 bis 5, dadurch gekennzeichnet, daß die zum Ersatz vorgesehenen Führungsklötze (14, 16, 71, 73) durch Schnapp-, Schraub- oder Klebeverbindungen an der Grundplatte (13, 43) lösbar befestigt sind.

7. Handkreissäge nach einem der Ansprüche 1 bis 6, dadurch gekennzeichnet, daß die Führungsklötze (14, 16, 71, 73) über Schnapp-, Schraub- oder Klebverbindung befestigte, auswechselbare, als Platten ausgestaltete Körper mit Führungsflächen (10, 12, 72, 74) tragen.

8. Handkreissäge nach einem der Ansprüche 1 bis 7, dadurch gekennzeichnet, daß die Grundplatte (13, 43) mehrere, in mindestens einen auf ihre Rückseite angespritzten bzw. angegriffenen Kanal mündende Durchbrüche trägt, die mit einem Ventilatorraum verbunden werden können, so daß die Handkreissäge auf einem Luftpolster verschiebbar unter Druck arretierbar ist.

## Claims

1. Motor-driven circular hand saw (1) comprising a base plate (13) fastened, in particular pivotably, to the machine casing (5) which preferably encloses an electric motor and which has separate parts (9, 14, 16, 27, 45, 59, 61, 63, 71, 73, 75) fastened on it and also has guide surfaces (10, 12, 72, 74) for guiding the circular hand saw (1), on a guide rail (21) provided with a guide rib (17), over workpieces (19), characterized in that the guide surfaces (10, 12, 72, 74) belong to separate guide blocks (14, 16, 71, 73) which are integrally moulded or cast on the base plate (13, 43) and which can engage around the guide rib (17) and by means of the guide surfaces (10, 12, 72, 74) are guidably supported on said guide rib, said guide blocks (14, 16, 71, 73) being detachably fastened on the base plate (13, 43), particularly on the outer edge.

2. Circular hand saw according to Claim 1, characterized in that the base plate (13, 43) contains a skeleton-like part, particularly a core plate (88) having a multiplicity of perforations, which carries the guide blocks (14, 16, 71, 73) preferably made of plastics material.

3. Circular hand saw according to Claim 2, characterized in that the base plate (13, 43) carries an integrally moulded or cast covering (33) of plastics material.

4. Circular hand saw according to Claim 1, characterized in that the base plate (13, 43) carries the following integrally moulded or cast parts: an additional handle (45) and/or at least one hinge-like abutment (8, 61, 62) pivotally mounting the circular hand saw (1), and/or a carrier (7, 60) holding the circular hand saw (1) and pivotally held in abutments (8, 61, 62), and/or in each case at least one clamp and guide lug (51, 58) and also locking and adjusting means (53, 57) for a parallel stop (23), and/or a cutting sight (59), and/or at least one saw blade limit mark (63), and/or at least one mains lead guide (67, 69), and/or a mains plug socket (65), and/or a container (79) or tape measure or the like, and/or at least one data or scale marking with operating details, and/or at least one guide roller (81, 84) for guiding the circular hand saw (1) with reduced friction.

5. Circular hand saw according to Claim 4, characterized in that the mains plug socket (65) can be electrically connected to the mains connection of the electric motor.

6. Circular hand saw according to one of Claims 1 to 5, characterized in that the guide blocks (14, 16, 71, 73) provided as replacements are detachably fastened to the base plate (13, 43) by snap, screw or adhesive connections.

7. Circular hand saw according to one of Claims 1 to 6, characterized in that the guide blocks (14, 16, 71, 73) carry exchangeable bodies which are fastened by means of snap, screw or adhesive connections and are in the form of plates and which have guide surfaces (10, 12, 72, 74).

8. Circular hand saw according to one of Claims 1 to 7, characterized in that the base plate (13, 43) bears a plurality of openings which lead into at least one duct integrally moulded or cast on its rear side and which can be brought into communication with a fan chamber, so that the circular hand saw can be moved on an air cushion and locked under pressure.

## Revendications

1. Scie circulaire à main (1) entraînée par un moteur, avec une plaque de base (13) fixée de préférence de façon à pouvoir pivoter sur le carter (5) entourant un moteur électrique, avec des pièces séparées fixées dessus (9, 14, 16, 27, 45, 59, 61, 63, 71, 73, 75) ainsi que des surfaces de guidage (10, 12, 72, 74) qui servent à guider la scie circulaire à main (1) sur un rail de guidage (21) pourvu de nervures de guidage (17), sur des pièces à oeuvrer (19), scie circulaire à main caractérisée en ce que les surfaces de guidage (10, 12, 72, 74) appartiennent à des blocs de guidage particuliers (14, 16, 71, 73) injectés ou coulés sur la plaque de base (13, 43), qui peuvent entourer la nervure de guidage (17) et s'appuyer sur celle-ci par les surfaces de guidage (10, 12, 72, 74) de façon à la guider, les blocs de guidage (14, 16, 71, 73) pouvant être fixés de façon amovible, en particulier par le bord extérieur, sur la plaque de base (13, 43).

2. Scie circulaire à main selon la revendication 1, caractérisée en ce que la plaque de base (13, 43) contient une partie en forme de bâti, en particulier une plaque centrale (88) percée de beaucoup de trous, qui porte les blocs de guidage (14, 16, 71, 73) de préférence réalisés en matière plastique.

3. Scie circulaire à main selon la revendication 1, caractérisée en ce que la plaque de base (13, 43) porte un revêtement en matière plastique (33) injecté ou coulé.

4. Scie circulaire à main selon la revendication 1, caractérisée en ce que la plaque de base (13, 43) porte les pièces injectées ou coulées suivantes : une poignée auxiliaire (45) et/ou au moins un contre-appui (8, 61, 62) en forme de charnière, recevant la scie circulaire à main (1) pour la faire pivoter, et/ou un support (7, 60) maintenant la scie circulaire à main (1) en la tenant de façon à pouvoir pivoter dans des contre-appuis (8, 61, 62), et/ou au moins des pattes de serrage et de guidage (51, 58) ainsi que des moyens de blocage et de réglage (53, 57) pour une butée parallèle (23), et/ou un cran de visée de coupe (59), et/ou au moins un repère de délimitation de lame de coupe (63), et/ou au moins un guide (67, 69) pour le câble de raccordement au réseau, et/ou au moins une prise de courant femelle de réseau (65), et/ou un récipient (79) pour un mètre ruban ou analogue, et/ou au moins une structure présentant des données ou une échelle avec des indications d'emploi, et/ou au moins un rouleau de guidage (81, 84) servant à guider avec peu de frottement la scie circulaire à main (1).

5. Scie circulaire à main selon la revendication 4, caractérisée en ce que la prise de courant femelle de réseau (65) peut être reliée électriquement au raccordement au réseau du moteur électrique.

6. Scie circulaire à main selon l'une des revendications 1 à 5, caractérisée en ce que les blocs de guidage (14, 16, 71, 73) prévus pour le remplacement sont fixés par encliquetage, vissage ou collage, sur la plaque de base (13, 43), de façon amovible.

7. Scie circulaire à main selon l'une des revendications 1 à 6, caractérisée en ce que les blocs de guidage (14, 16, 71, 73) portent des corps munis de surfaces de guidage (10, 12, 71, 74), corps qui sont fixés par encliquetage, vissage ou collage, qui sont interchangeables et qui ont la forme de plaques.

8. Scie circulaire à main selon l'une des revendications 1 à 7, caractérisée en ce que la plaque de base (13, 43) porte des passages qui débouchent dans au moins un canal injecté ou rapporté sur sa face arrière, passages qui peuvent être reliés à une chambre de ventilateur, de telle sorte que la scie circulaire à main puisse être mise sur un coussin d'air de façon à coulisser sous pression.
